(19) Europäisches Patentamt
European Patent Office
Office européen des brevets

(11) EP 4 530 274 A1

(12) EUROPEAN PATENT APPLICATION

(43) Date of publication:
**02.04.2025 Bulletin 2025/14**

(21) Application number: **23199951.7**

(22) Date of filing: **27.09.2023**

(51) International Patent Classification (IPC):
***C04B 28/02*** *(2006.01)* ***C04B 40/00*** *(2006.01)*

(52) Cooperative Patent Classification (CPC):
(C-Sets available)
**C04B 28/02; C04B 40/0039;** C04B 2103/0027;
C04B 2111/20; C04B 2111/2015 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sika Technology AG**
**6340 Baar (CH)**

(72) Inventors:
- **SCHWOON, Oliver**
  **8952 Schlieren (CH)**
- **VORWERK, Michael**
  **8115 Hüttikon (CH)**
- **SILVA, Nelson**
  **8105 Regensdorf (CH)**
- **WOMBACHER, Franz**
  **8916 Jonen (CH)**

(74) Representative: **Sika Patent Attorneys**
**C/o Sika Technology AG**
**Corp. IP Dept.**
**Tüffenwies 16**
**8048 Zürich (CH)**

# (54) IMPROVING RESISTANCE OF MINERAL BINDER-BASED MATERIALS AGAINST SULFATE AND/OR CHLORIDE ATTACK

(57) A polyol is used for improving the sulfate resistance and/or the chloride resistance of a mineral binder composition.

EP 4 530 274 A1

(52) Cooperative Patent Classification (CPC): (Cont.)

C-Sets
**C04B 28/02, C04B 24/02, C04B 24/2647,**
**C04B 2103/32;**
**C04B 40/0039, C04B 24/02, C04B 24/2647**

## Description

### Technical field

The invention is concerned with the use of a specifically selected substance for improving the sulfate resistance and/or the chloride resistance of a hardened mineral binder composition. Furthermore, the invention is directed to an admixture suitable for improving the sulfate resistance and/or the chloride resistance of hardened mineral binder compositions.

### Background art

Structures produced from hardened cementitious mineral binder compositions, such as mortar or concrete structures, are sensitive to sulfate attack. Specifically, sulfate attack is a chemical breakdown mechanism where sulfate ions react with hydration products of tricalcium aluminate (C3A) present in the hardened mineral binder compositions. Sulfate attack results in the formation of ettringite and in some cases further expansive products. These products lead to increases in volume and to high internal pressure in the mineral binder based structures and therefore cracking and spalling occurs.

Sulfate attack typically occurs when mineral binder based structures come into contact with water containing sulfate ions, e.g. presents in soils, in seawater, and in wastewater treatment plants. This is also referred to as external attack.

Another origin of sulfate attack is excess gypsum in the mineral binder composition. Excess gypsum may be introduced into mineral binder composition by over-sulfated cement, aggregates comprising natural gypsum, or admixtures containing small amounts of sulfate. This kind of sulfate attack is called internal attack.

A common way of protecting against sulfate attack is to reduce the alumina content by limiting the tricalcium aluminate content in the mineral binder. Another approach to improve the resistance of the mineral binder compositions against sulfate attack is based on adding supplementary cementitious materials, e.g. fly ash and slag, to the mineral binder compositions.

US 5,772,752 A (New Jersey Institute of Technology) describes for example the use of fly ash as additional compound in concrete and mortar mixtures for achieving significant levels of acid and sulfate resistance while maintaining acceptable compressive strength properties.

However, known solutions for mitigating sulfate attack often depend on the availability and quality of mitigating substances, e.g. supplementary cementitious materials, and/or they impair other properties of mineral binder compositions, such as e.g. setting times and compressive strength.

Likewise, if structures produced from cementitious mineral binder compositions comprise metal-based reinforcements, chloride-induced corrosion is another breakdown mechanism impairing the long-term performance of such structures.

Although chloride concentrations in cements, mixing water, aggregates, and admixtures are strictly controlled, chlorides may penetrate into structures made from hardened mineral binder compositions from external sources, such a e.g. seawater, groundwater or soil.

In order to protect reinforced mineral binder based structures from chloride attack, for example, reinforcing elements may be coated with epoxy resins or protected by cathodic protection. Alternatively, the structure as a whole might be treated with a protective coating to reduce penetration of chloride from external sources.

In this regard, US 2003/0168781 A1 (Kukkonen et al.) describes another method for protecting reinforcement in concrete from corrosion caused by chloride ions. Thereby, metallic copper and/or copper compounds are added to the concrete mass, in which the copper reacts with the chloride to form salts of low solubility, thus substantially reducing the danger of steel corrosion caused by chloride.

However, such measures for mitigating chloride attack are time-consuming, expensive or impair other properties of mineral binder compositions.

Thus, there is still a need to develop improved solutions, which have fewer or no such problems.

### Disclosure of the invention

It is an object of the present invention to provide improved solutions, which allow for improving the sulfate resistance and/or the chloride resistance of mineral binder compositions. Especially, the solution should be flexible and as easy as possible to implement. Desirably, the solution should affect properties of mineral binder compositions, such as e.g. processing and setting properties, as little as possible.

Surprisingly, it was found that these objects can be achieved with the features of claim 1. Specifically, a polyol is used in a targeted manner for improving the sulfate resistance and/or the chloride resistance of a mineral binder

composition.

Using polyols for these purposes turned out to be highly beneficial. Especially, it is possible to significantly increase the sulfate resistance and at the same time also the chloride resistance of mineral binder compositions in a rather easy manner, for example by simply adding the polyol to the mineral binder composition before and/or during preparation of the processable mineral binder composition, e.g. by adding the polyol to the mixing water.

Thus, for increasing the sulfate resistance and the chloride resistance of mineral binder compositions, only one additive is required or two problems can be solved at once, respectively. In a highly preferred embodiment, the polyol therefore is used for simultaneously improving the sulfate resistance and the chloride resistance of the mineral binder composition.

Furthermore, there is no need to use special sulfate resistant cements with low aluminum content or specific supplementary cementitious materials. Thus, the inventive solution can be used in a highly flexible manner for ordinary mineral binder compositions as well as more special compositions that have been adapted to specific applications.

Likewise, the polyols can be combined with most existing admixtures used in mineral binder compositions, such as e.g. plasticizers, hardening accelerators, and/or air-entraining agents, without compromising their effectiveness.

Effective dosage levels of the polyols for achieving the effects according to the invention are rather low. Therefore, the polyols do not significantly change the composition of the mineral binder compositions.

Furthermore, it turned out that the polyols when used with effective dosage levels do not have a material impact on the processing properties and the strength development of the mineral binder composition.

Further aspects of the invention are the subject matter of other independent claims. Especially preferred embodiments of the invention are the subject matter of the dependent claims.

## Ways of carrying out the invention

A first aspect of the invention relates to the use of a polyol for improving the sulfate resistance and/or the chloride resistance of a hardened mineral binder composition.

The sulfate resistance can for example be determined in line with standard SIA 262/1 :2019, Annex D. This test method provides a means of assessing the sulfate resistance of a hardened mineral binder samples. In this test, samples are subject to wet/dry cycling for four weeks followed by submersion in a sulfate solution (5% sodium sulfate solution) for eight weeks. The sulfate might react with parts of the samples and causes a volumetric change of the sample, which then is observed.

Chloride resistance can be determined in line with to standard SIA 262/1 :2019, Annex B. The test method enables the determination of the chloride penetration at a specified age, e.g. 28 days.

Improving the sulfate resistance and/or the chloride resistance of a given mineral binder composition by use of a polyol means that the sulfate resistance and/or the chloride resistance of said mineral binder composition comprising the polyol at a given age, e.g. 28 days, is better than the sulfate resistance and/or the chloride resistance of a reference sample not comprising the polyol but otherwise having an identical composition at the same age.

The term polyol as used in the present context stands for a chemical compound comprising at least two hydroxyl groups. For the inventive use, a polyol in the form of a pure substance or a mixture of two or more different polyols can be used.

In principle, the polyol can be chosen from a broad range of substances including non-polymeric as well as polymeric substances.

In particular, a weight average molecular weight ($M_w$) of the polyol is at most 500 g/mol, especially at most 250 g/mol, in particular at most 180 g/mol. While polyols with rather low molecular weights are highly effective, they hardly impair the effectiveness of other additive such as e.g. plasticizers.

Preferably, the polyol is a diol, especially a glycol.

Further preferred, a ratio of ether groups to hydroxyl groups in the polyol is from 0 - 1, especially 0 - 0.5, in particular 0 - 0.1, most preferably 0. Thus, it turned out beneficial to use polyols with a limited proportion of ether groups or no ether groups at all.

Especially preferred, the polyol does not comprise polymerized repeating units. Put differently, the polyol in particular is a non-polymeric substance. Such polyols are highly effective with regard to the inventive purposes at rather low dosages. Also, they hardly affect other properties of the mineral binder compositions.

Especially, the polyol is a polyol of formula $C_nH_{2n}(OH)_2$ with n = 2 - 10, especially n = 4 - 8, in particular n = 5 - 6.

Especially suitable polyols include but are not limited to ethylene glycol, diethylene glycol, triethylene glycol, propylene glycol, butylene glycol, pentylene glycol, neopentyl glycol and/or hexylene glycol. In particular, the polyol is selected from neopentyl glycol, hexylene glycol or mixtures thereof.

The term hexylene glycol in particular refers to 2-methyl-2,4-pentanediol.

According to an especially preferred embodiment, a combination of at least a first polyol and a second polyol is used, whereby the first and the second polyols are physically and/or chemically different. Put differently, in this case the

polyol is used in the form of a mixture of at least two different polyols. In particular, a combination of two polyols, in particular of neopentyl glycol and hexylene glycol, is used.

Combinations of polyols allow for further adjusting and/or improving the sulfate resistance and/or chloride resistance.

With the combination, a weight ratio of the first polyol to the second polyol preferably is 0.1 - 10, especially 0.3 - 2, in particular 0.5 - 1.5, especially 0.8 - 1.2.

In particular, the polyol(s) is/are used in the form of an aqueous solution, in particular having a proportion of water in the range of 5 - 60 wt.%, especially 10 - 50 wt.%, for example 25 - 45 wt.%, with respect to the total weight of the aqueous solution.

In the aqueous solution, preferably, a proportion of the polyol(s) is from 40 - 95 wt.%, especially 50 - 90 wt.%, for example 55 - 75 wt.%. This is in particular true of a mixture of two or more different polyols is used.

According to a highly preferred embodiment, with respect to the total weight of the aqueous solution, the aqueous solution comprises or consists of:

- 10 - 50 wt.%, in particular 25 - 45 wt.%, especially 30 - 40 wt.%, of water;
- 10 - 40 wt.%, in particular 15 - 35 wt.%, especially 20 - 30 wt.%, of a first polyol, especially neopentyl glycol;

10 - 50 wt.%, in particular 30 - 50 wt.%, especially 35 - 45 wt.%, of a second polyol, especially hexylene glycol. In particular, a proportion of polyol used is from 0.0001 - 10 wt.-%, especially 0.01 - 5 wt.%, in particular 0.1 - 3 wt.-%, particularly 0.5 - 2 wt.%, with respect to the weight of the mineral binder in the mineral binder composition.

If a mixture of different polyols is used, the proportion is with respect to the total amount all polyols.

In another preferred embodiment, the polyols(s) is/are used in combination with a polyalkylene glycol. In particular, the polyalkylene glycol is chemically different from the polyol(s).

Especially the polyalkylene glycol has two hydroxyl groups or one hydroxyl group, especially one hydroxyl group.

In particular the polyalkylene glycol at one end is alkyl-terminated, e.g. with an alkyl group having 1 - 20 carbon atoms, especially 2-10 carbon atoms, in particular 3-8 carbon atoms.

Especially, a weight-average molecular weight (Mw) of the polyalkylene glycol is from 550 - 10’000 g/mol, especially 1’000 - 6’000 g/mol, in particular 2’000 - 5’000 g/mol.

In a special embodiment, the polyalkylene glycol is a polyalkylene glycol alkyl ether. In particular the polyalkylene glycol alkyl ether is a reaction product of (i) a monoalcohol with alkylene oxide, especially ethylene oxide and/or propylene oxide and/or (ii) of a diol with alkylene oxide, especially ethylene oxide and/or propylene oxide.

Especially, the polyalkylene glycol is a poly-(alkylene glycol)-monoalkylether, in particular a poly-(ethylene glycol-propylene glycol)-monoalkylether, for example poly-(ethylene glycol-propylene glycol)-monobutylether, and/or the polyalkylene glycol is a polyethylene glycol neopentyl ether, in particular a poly(oxy-1,2-ethanediyl), α,α’-(2,2-dimethyl-1,3-propanediyl)bis[ω-hydroxy]. Poly(oxy-1,2-ethanediyl), a,a’-(2,2-dimethyl-1,3-propanediyl)bis[ω-hydroxy] is the reaction product of 2,2- dimethylpropane-1,3-diol with ethylene oxide.

Poly-(ethylene glycol-propylene glycol)-monoalkylethers are e.g. available under the tradename Pluriol® A 520 PE from BASF. Poly(oxy-1,2-ethanediyl),α,α’-(2,2-dimethyl-1,3-propanediyl)bis[ω-hydroxy] or Polyethylene glycol) neopentyl ether is available under the tradename SITREN SRA L 201 from Evonik.

A weight ratio of the polyol to the polyalkylene glycol preferably is 0.1 - 10, especially 0.3 - 2, in particular 0.5 - 1.5, especially 0.8 - 1.2. If a mixture of different polyols and/or a mixture of different polyalkylene glycols is used, the ratio is with respect to the total amount all polyols or all polyalkylene glycols, respectively.

In particular, the polyalkylene glycol is used in the form of an aqueous solution, in particular having a proportion of water in the range of 5 - 60 wt.%, especially 10 - 50 wt.%, for example 25 - 45 wt.%, with respect to the total weight of the aqueous solution. Preferably, the polyalkylene glycol and the polyol(s) are present in the same aqueous solution.

In the aqueous solution, preferably, a proportion of the polyalkylene glycol is from 5 - 95 wt.%, especially 15 - 60 wt.%, for example 30 - 50 wt.%.

According to a highly preferred embodiment, with respect to the total weight of the aqueous solution, the aqueous solution comprises or consists of:

- 10 - 50 wt.%, in particular 25 - 45 wt.%, especially 30 - 40 wt.%, of water;
- 10 - 40 wt.%, in particular 15 - 35 wt.%, especially 20 - 30 wt.%, of the polyol(s), especially neopentyl glycol;
- 10 - 50 wt.%, in particular 30 - 50 wt.%, especially 35 - 45 wt.%, of the polyalkylene glycol, especially a polyalkylene glycol alkyl ether, in particular a poly-(ethylene glycol-propylene glycol)-monoalkylether and/or a polyethylene glycol neopentyl ether.

If a mixture of different polyols is used, the proportion(s) related to the polyol are with respect to the total amount all polyols. Likewise, if a mixture of different polyalkylene glycols is used, the proportion(s) related to the polyalkylene glycols is with respect to the total amount of all polyalkylene glycols.

Highly preferred, the polyol is used in combination with a plasticizer. Without wishing to be bound by theory, it is believed that the polyol and the plasticizer may functionally interact to further improve sulfate resistance and/or chloride resistance, especially the chloride resistance.

In particular, the plasticizer is chemically different from the polyol and the polyalkylene glycol.

A plasticizer can be selected from naphthalene derivatives, melamine derivatives, aminosulfonic acid derivatives, ligno sulphonate derivatives, polycarboxylate-based superplasticizers, condensates of formaldehyde and polyalkoxylated aromatics, and mixtures thereof. Especially preferred, the plasticizer is a polycarboxylate ether.

In particular, the plasticizer is used with a proportion of 0.0001 - 10 wt.-%, especially 0.01 - 5 wt.%, in particular 0.1 - 3 wt.-%, particularly 0.5 - 2 wt.%, with respect to the weight of the mineral binder in the mineral binder composition.

A weight ratio of the plasticizer to the polyol is 0.001 - 5, especially 0.01 - 2, in particular 0.1 - 1. If a mixture of different polyols is used, the proportion is with respect to the total amount all polyols.

The polycarboxylate ether preferably is a comb polymer **CP** with the following substructure units:

a) a molar parts of a substructure unit **S1** of the formula I:

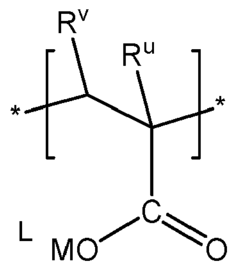

(I)

b) b molar parts of a substructure unit **S2** of the formula II

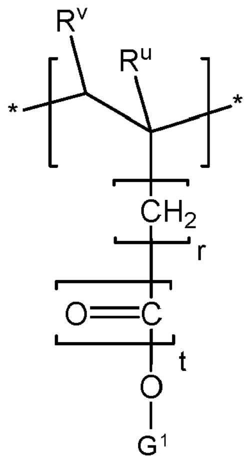

(II)

c) c molar parts of a substructure unit **S3** of the formula (III):

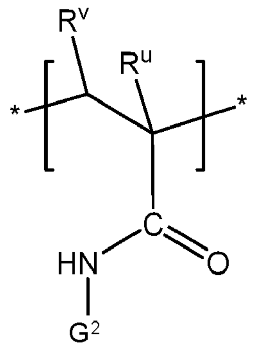

(III)

d) d molar parts of a substructure unit **S4** of the formula (IV)

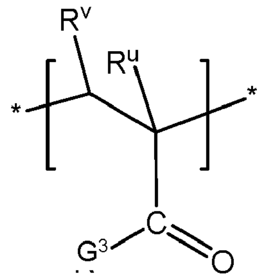

(IV)

where

L independently represents $H^+$, an alkali metal ion, alkaline earth metal ion, a di- or trivalent metal ion, an ammonium ion or an organic ammonium group,
each $R^u$ independently of the others is hydrogen or a methyl group,
each $R^v$ independently of the others is hydrogen or COOM,
r = 0, 1 or 2,
t = 0 or 1,
$G^1$ and $G^2$ is independently a $C_1$- to $C_{20}$-alkyl group, -cycloalkyl group, -alkylaryl group or is $-(CH_2)_z-(O)_{z'}-[A'O]_s-G^4$,
where z = 0, 1, 2, 3, or 4, z' = 0 or 1, A' = $C_2$- to $C_4$-alkylene, $G^4$ is H, a $C_1$- to $C_{20}$-alkyl group, -cycloalkyl group or -alkylaryl group, and s = 2-250,
$G^3$ is independently $NH_2$, $-NG^5G^6$, $-OG^7NG^8G^9$,

where $G^5$ and $G^6$ are independently

a $C_1$- to $C_{20}$-alkyl group, -cycloalkyl group, -alkylaryl group or -aryl group,
or are a hydroxyalkyl group or are an acetoxyethyl group ($CH_3$-CO-O-$CH_2$-$CH_2$-) or a hydroxyisopropyl group (HO-CH($CH_3$)-$CH_2$-) or an acetoxyisopropyl group ($CH_3$-CO-O-CH($CH_3$)-$CH_2$-);

or $G^5$ and $G^6$ together form a ring of which the nitrogen is part, in order to construct a morpholine or imidazoline ring;
$G^7$ is a $C_2$-$C_4$-alkylene group,
$G^8$ and $G^9$ each independently represent a $C_1$- to $C_{20}$-alkyl group, - cycloalkyl group, -alkylaryl group, -aryl group or a hydroxyalkyl group,

and where a, b, c and d represent molar proportions of the respective substructure units **S1, S2, S3** and **S4,** with

$$a/b/c/d = (0.1\text{-}0.9) / (0.1\text{-}0.9) / (0\text{-}0.8) / (0\text{-}0.8),$$

especially

$$a/b/c/d = (0.3\text{-}0.9) / (0.1\text{-}0.7) / (0\text{-}0.6) / (0\text{-}0.4),$$

preferably

$$a/b/c/d = (0.5\text{-}0.8) / (0.2\text{-}0.4) / 0 / 0$$

and with the proviso that a + b + c + d = 1.

A "comb polymer" is a polymer comprising a polymer backbone and side chains bonded thereto.

The sequence of the substructure units **S1, S2, S3** and **S4** may be alternating, block wise or random. It is also possible that the one or more substructure units **S1, S2, S3** and **S4** form a gradient structure. In principle, it is also possible that further structural units are present in addition to the substructure units **S1, S2, S3** and **S4.** In particular, the sequences of the substructure units **S1, S2, S3** and **S4** in the comb polymer **CP** are random or statistical.

Preferably, the substructure units **S1, S2, S3,** and **S4** together have a proportion of at least 50% by weight, especially at least 90% by weight, most preferably at least 95% by weight, of the total weight of the comb polymer **CP**.

In the comb polymer **CP,** $R^v$ especially represents hydrogen and $R^u$ is preferably hydrogen and/or a methyl group.

Preferably, in the comb polymer **CP,** r = 0 and t = 1. Also advantageously, r = 1-2 and t = 0.

More particularly, in the comb polymer **CP,** $R^v$ is hydrogen, $R^u$ is a methyl group, r = 1-2 and t = 0.

$G^1$ and/or $G^2$ in the comb polymer **CP,** in each case independently, are advantageously $-[A'O]_s-G^4$ with s = 8-200, especially 20-70, and A' is a $C_2$- to $C_4$-alkylene. Thus, advantageously z = z' = 0.

In the comb polymer **CP,** $G^4$, in each case independently, is preferably hydrogen or a methyl group.

Very particularly advantageous comb polymers **CP** are those where

a) the $R^u$ and $R^v$ moieties are hydrogen,
b) r=0,
c) t = 1,
d) $G^1$ and $G^2$, in each case independently, are $-(CH_2)_z-(O)_{z'}-[A'O]_s-G^4$ with z = z' = 0, s = 20-70 and A' = $C_2$-alkylene,
e) $G^4$ represents a methyl group and/or
f) a/b/c/d = (0.5-0.8) / (0.2-0.4) / (0.001-0.005) 10

Likewise advantageous polymers **CP** are those where

a) t = 0 and r = 1-2,

b) $G^1$, in each case independently, is $-(CH_2)_z-(O)_{z'}-[A'O]_s-G^4$ with z = z' = 0, s = 8-200, especially 20-70,

c) $G^4$ represents hydrogen or a methyl group, especially hydrogen,

d) and/or A' is a $C_2$- to $C_4$-alkylene, especially a $C_2$-alkylene.

A weight-average molecular weight (Mw) of the polymer **CP** is particularly in the range of 5'000-150'000 g/mol, preferably 10'000-100'000 g/mol, especially 20'000-90'000 g/mol. The weight-average molecular weight (Mw) is determined by gel permeation chromatography (GPC), using polyethylene glycol (PEG) as standard.

The preparation of comb polymers **CP** is known per se to the person skilled in the art. Corresponding superplasticizers or comb polymers **CP** are also commercially supplied by Sika Schweiz AG under the ViscoCrete® trade name series.

The polyol preferably is used in the form of an aqueous admixture comprising the polyol, and optionally one or more further additives, e.g. the plasticizer. This allows for an easy and flexible addition of the polyol to the mineral binder composition before and/or during processing.

The admixture in particular comprises 50 - 100 w.%, especially 60 - 90 w.-%, polyol, and water. One or more further additives, such as e.g. a plasticizer and optionally further additives may be present as well.

In particular, the polyol is added to the mineral binder composition before and/or during addition of mixing water. Thus, the polyol can for example be added to a single component of the mineral binder composition, e.g. the mineral binder or the aggregates, or it can be added to the premixed mineral binder composition in dry or in wet state. Thereby, the polyol can easily be mixed and homogeneously be distributed throughout the mineral binder composition.

Especially, the polyol is added to the mineral binder composition together with the plasticizer, especially before and/or during addition of mixing water. Such a onestep addition makes handling and mixing easier.

The term "mineral binder" denotes a binder which reacts in the presence of water in a hydration reaction to form

solid hydrates or hydrate phases. This can be, for example, a hydraulic binder, a latent hydraulic binder, and/or a pozzolanic binder. Highly preferred are hydraulic binders. Hydraulic binders can set underwater. But it can also be advantageous for the mineral binder to contain other binders in addition to or instead of a hydraulic binder. These are, in particular, latent hydraulic binders and/or pozzolanic binders. Suitable latent hydraulic and/or pozzolanic binders are, e.g., slag, fly ash, silica dust and/or natural pozzolans.

A "mineral binder composition" is meant to be a composition comprising at least a mineral binder and optionally further components.

The mineral binder in the mineral binder composition in particular comprises or consists of cement, especially cement of type CEM I, CEM II, CEM III, CEM IV and/or CEM V, according to the standard EN 197-1:2011.

In another preferred embodiment, the mineral binder in the mineral binder composition comprises slag, especially ground-granulated blast-furnace slag. Thereby, the slag in particular is present in combination with a hydraulic binder, especially cement.

In another preferred embodiment, the mineral binder in the mineral binder composition comprises clay, especially calcined clay. Thereby, the clay in particular is present in combination with a hydraulic binder, especially cement.

As it turned out, the inventive solution is in particular effective with these kinds of mineral binders.

In one preferred embodiment, with respect to the overall mineral binder content, the mineral binder contains at least 5 wt.-%, especially at least 20 wt.-%, preferably at least 35 wt.-%, especially at least 65 wt.-%, of hydraulic binder, especially cement, and, optionally, 5 to 95 wt.-%, especially 5 to 65 wt.-%, particularly 15 to 35 wt.-%, of latent hydraulic and/or pozzolanic binder, especially slag or clay, particularly ground-granulated blast-furnace slag or calcined clay.

The mineral binder composition furthermore may comprise aggregates. The term "aggregates" includes any type of mortar and/or concrete aggregates. In particular, the aggregates feature a density of 2.2 - 3 $kg/dm^3$.

Especially, the aggregates include stone, gravel, sand powdered quartz, and/or limestone. However, the aggregates may comprise or consist of lightweight aggregates, in particular foamed clay or polystyrene, or heavy aggregates, such as barite, iron ore and the like.

In particular, a grain size of the aggregates is at least 0.063 mm or at least 0.125 mm.

Preferably, the grain size of the aggregates at most 125 mm or at most 32 mm.

Especially, the grain size of the aggregates is 0.063 - 125 mm, especially from 0.063 - 32 mm, in particular from 0.125 - 16 mm, for example from 0.063 - 8 mm or from 0.125 - 5 mm.

Within the present context, the grain size is determined by sieve analysis, in particular with sieves featuring square openings. Especially, the grain size is expressed by the opening size of the test sieves just passed by the grains or particles concerned.

Additionally, the mineral binder composition may comprise a further additive, especially selected from additives conventionally used in mortar or concrete compositions. Especially the further additive is selected from accelerators; corrosion inhibitors; retarders; shrinkage reducers; antifoams, and/or foamformers. Thereby, the further additive is chemically and/or physically different from the polyol and/or the plasticizer.

A proportion of the further additive in particular is from 0.0001 - 10 wt.-%, especially 0.001 - 5 wt.%, in particular 0.01 - 2 wt.-%.

Especially, the mineral binder composition is a grout, a mortar or a concrete composition.

For preparing the mineral binder composition, mixing water is added.

Preferably, a ratio of water to mineral binder in the mineral binder composition in particular is from 0.25 - 0.8, especially 0.3 - 0.6, for example 0.4 - 0.5.

Another aspect of the present invention is directed to an admixture for improving the sulfate resistance and/or the chloride resistance of a mineral binder composition, whereby the admixture comprises a polyol as described above. In particular, the admixture further comprises one or more of the following components: a plasticizer, a polyalkylene glycol, water, and/or one or more further additives. The polyol, the plasticizer, the polyalkylene glycol, as well as the one or more additives, are defined as described above.

Especially, the admixture is an aqueous solution, in particular with a water content and/or composition as described above.

In the admixture, the polyol preferably is a polyol of formula $C_nH_{2n}(OH)_2$ with n = 2 - 10, especially n = 4 - 8, in particular n = 5 - 6, or one of the substances mentioned above.

Especially preferred, an above-described combination of at least a first polyol and a second polyol is used, in particular a combination of two polyols, preferably a combination of neopentyl glycol and hexylene glycol.

A weight ratio of the first polyol to the second polyol preferably is 0.1 - 10, especially 0.3 - 2, in particular 0.5 - 1.5, especially 0.8 - 1.2.

In particular, if present, the plasticizer in the admixture is a polycarboxylate ether, preferably is a comb polymer **CP,** as described above.

Especially in the admixture, a weight ratio of the plasticizer to the polyol is 0.001 - 5, especially 0.01 - 2, in particular 0.1 - 1.

A weight ratio of the polyol to the polyalkylene glycol preferably is 0.1 - 10, especially 0.3 - 2, in particular 0.5 - 1.5, especially 0.8 - 1.2. If a mixture of different polyols is used, the ratio(s) related to the polyol is/are with respect to the total amount all polyols.

In special embodiments, the admixture for improving the sulfate resistance and/or the chloride resistance of a mineral binder composition is an aqueous solution comprising:

a) 10 - 50 wt.%, in particular 25 - 45 wt.%, especially 30 - 40 wt.%, of water; and

10 - 40 wt.%, in particular 15 - 35 wt.%, especially 20 - 30 wt.%, of a first polyol, especially neopentyl glycol; and

10 - 50 wt.%, in particular 30 - 50 wt.%, especially 35 - 45 wt.%, of a second polyol, especially hexylene glycol;

whereby the first and the second polyols are physically and/or chemically different

or

b) 10 - 50 wt.%, in particular 25 - 45 wt.%, especially 30 - 40 wt.%, of water; and

10 - 40 wt.%, in particular 15 - 35 wt.%, especially 20 - 30 wt.%, of a polyol; especially neopentyl glycol, and

10 - 50 wt.%, in particular 30 - 50 wt.%, especially 35 - 45 wt.%, of a polyalkylene glycol, especially of polyalkylene glycol alkyl ether, in particular poly-(ethylene glycol-propylene glycol)-monoalkylether and/or polyethylene glycol neopentyl ether.

The admixture can in particular be a one-component admixture. Thereby, all of the constituents of the admixture are present in a single receptacle.

Alternatively, the admixture can be a two- or multi-component admixture. Thereby, for example, the polyol is located in a first receptacle and the plasticizer is located in a second receptacle. Optionally present further additives might be located in one of the first and the second receptacle or in one or more further receptacles.

Further advantageous implementations of the invention are evident from the exemplary embodiments.

**Exemplary embodiments**

In a first set of tests, several concrete compositions have been produced under identical conditions with different proportions of plasticizer and polyol. The plasticizer and the polyol, if used, have been added together with the mixing water for producing the concrete compositions. Details about the concrete compositions and their properties are given in table 1.

*Table 1*

| Example → <br> Components ↓ | R1 | A1 | A2 |
|---|---|---|---|
| Mineral binder | 8.571 kg cement (CEM I 42.5 N) | | |
| Aggregates | 53.8 kg sand/gravel (0 - 32 mm) | | |
| Plasticizer [wt.%][1)] | - | - | 0.1 |
| Polyol [wt. %][2)] | - | 1.0 | 2.0 |
| Water to binder (w/b) | 0.58 | | |
| Fresh Density [kg/cm$^3$] | 2'422 | 2'434 | 2'405 |
| FTS @ 0 Minutes [cm][3)] | 50 | 49 | 53 |
| Compressive strength[4)] @28 days [MPa] | 37.5 | 45.1 | 38.9 |
| Sulfate resistance[5)] | 4.91 | 1.12 | 0.99 |

(continued)

| Example → Components ↓ | R1 | A1 | A2 |
|---|---|---|---|
| Chloride resistance[6)] | 11.3 | 11.0 | 9.43 |
| 1) Sika® Viscocrete®-3082 (available from Sika Schweiz AG); Polycarboxylate-based superplasticizer (wt.% with respect to mineral binder)<br>2) Aqueous mixture consisting of 39 wt.% hexylene glycol, 27 wt.% neopentyl glycol and 34 wt.% water (wt.% in table with respect to mineral binder)<br>3) Flow table spread, according to EN 12350-5:2019<br>4) According to EN 12390-3:2009<br>5) Lengthening in ‰, measured according to SIA 262/1:2019, Annex D<br>6) Migration coefficient in $10^{-12}$ $m^2/s$, measured according to SIA 262/1:2019, Annex B | | | |

As evident from table 1, addition 1 wt.% of the polyol mixture consisting of hexylene glycol and neopentyl glycol results in a significantly improved sulfate resistance as well as a reduced chloride resistance (cf. example A1), when compared to a similar composition without any polyol (cf. reference example R1). Regarding the sulfate resistance and the chloride resistance, a lower value is indicative of a better resistance.

Furthermore, when using an increased proportion of the polyol mixture together with a polycarboxylate-based plasticizer, the sulfate resistance as well as the chloride resistance can further be improved.

Remarkably, neither the compressive strength nor the processability (FTS) are impaired by the addition of the polyol and the plasticizer.

In a second set of tests, further concrete compositions with a lower water content (lower w/b value) and cement content have been produced. The compositions as well as the properties obtained with these experiments are shown in table 2.

*Table 2*

| Example → Components ↓ | R2 | B1 | B2 | B3 | R3 |
|---|---|---|---|---|---|
| Mineral binder | 10.0 kg cement (CEM 142.5 N) | | | | 9.7 kg |
| Aggregates | 53.8 kg sand/gravel (0 - 32 mm) | | | | |
| Plasticizer [wt.%][1)] | 0.6 | 0.7 | 0.6 | 0.8 | 0.6 |
| Polyol [wt. %][2)] | - | 1.0 | 2.0 | 2.0 | - |
| Silica fume [kg] | - | | | | 12 |
| Water to binder (w/b) | 0.45 | | | | |
| Fresh Density [kg/$cm^3$] | 2’443 | 2’440 | 2’456 | 2’436 | 2’427 |
| FTS @ 0 minutes [cm][3)] | 51 | 57 | 55 | 55 | 51 |
| Compressive strength[4)] @28 days [MPa] | 55.7 | 55.4 | 51.9 | 55.4 | 60.4 |
| Sulfate resistance[5)] | 1.04 | 0.40 | 0.34 | 0.54 | 3.38 |
| Chloride resistance[6)] | 8.30 | 6.33 | 7.4 | 7.1 | 6.2 |
| 1) Sika® Viscocrete®-3082 (available from Sika Schweiz AG); Polycarboxylate-based superplasticizer (wt % with respect to mineral binder)<br>2) Aqueous mixture consisting of 39 wt % hexylene glycol, 27 wt % neopentyl glycol and 34 wt % water (wt.% in table with respect to mineral binder)<br>3) Flow table spread, according to EN 12350-5:2019<br>4) According to EN 12390-3:2009<br>5) Lengthening in ‰, measured according to SIA 262/1:2019, Annex D<br>6) Migration coefficient in $10^{-12}$ $m^2/s$, measured according to SIA 262/1:2019, Annex B | | | | | |

Like in the first set of experiments, the addition of the polyol mixture clearly improves sulfate and chloride resistance. This can be deduced from a comparison of reference example R2 vs. example B2, which apart from the polyol

is essentially identical in composition.

When increasing the plasticizer concentration while keeping the polyol content constant, the chloride resistance can further be improved (cf. experiment B2 vs. experiment B3). The same is true when increasing the plasticizer concentration and at the same time reducing the polyol content (cf. experiment B2 vs. experiment B1). Thus by adjusting the ratio of plasticizer to polyol, the resistances can be tuned and adapted to specific needs.

Interestingly, when using silica fume instead of a polyol, the chloride resistance can be improved as well. However, in this case the sulfate resistance decreases and a rather large amount of silica fume is needed.

It will be appreciated by those skilled in the art that the present invention can be implemented in other specific forms without departing from the spirit or essential characteristics thereof. The presently disclosed embodiments are therefore considered in all respects to be illustrative and not restrictive.

## Claims

**1.** Use of a polyol for improving the sulfate resistance and/or the chloride resistance of a hardened mineral binder composition.

**2.** Use according to claim 1, whereby the polyol is a diol, especially a glycol.

**3.** Use according to any of preceding claims, whereby a weight average molecular weight ($M_w$) of the polyol is at most 500 g/mol, especially at most 250 g/mol, in particular at most 180 g/mol.

**4.** Use according to any of preceding claims, whereby a ratio of ether groups to hydroxyl groups in the polyol is from 0 - 1, especially 0 - 0.5, in particular 0 - 0.1, most preferably 0.

**5.** Use according to any of preceding claims, whereby the polyol is a polyol of formula $C_nH_{2n}(OH)_2$ with n = 2 - 10, especially n = 4 - 8, in particular n = 5 - 6.

**6.** Use according to any of preceding claims, whereby the polyol is selected from ethylene glycol, diethylene glycol, triethylene glycol, propylene glycol, butylene glycol, pentylene glycol, neopentyl glycol and/or hexylene glycol.

**7.** Use according to any of preceding claims, whereby a combination of at least a first polyol and a second polyol is used, whereby the first and the second polyols are physically and/or chemically different, especially a combination of neopentyl glycol and hexylene glycol.

**8.** Use according to claim 7, whereby with the combination, a weight ratio of the first polyol to the second polyol is 0.1 - 10, especially 0.3 - 2, in particular 0.5 - 1.5, especially 0.8 - 1.2.

**9.** Use according to any of preceding claims, whereby a proportion of polyol used is from 0.0001 - 10 wt.-%, especially 0.01 - 5 wt.%, in particular 0.1 - 3 wt.-%, particularly 0.5 - 2 wt.%, with respect to the weight of the mineral binder in the mineral binder composition.

**10.** Use according to any of preceding claims, whereby the polyol is used in combination with a polyalkylene glycol, which is chemically and/or physically different from the polyol, especially a polyalkylene glycol alkyl ether, in particular a poly-(ethylene glycol-propylene glycol)-monoalkylether and/or a polyethylene glycol neopentylether.

**11.** Use according to any of claims 7 - 10, whereby the polyol is used in the form of an aqueous solution comprising:

a) 10 - 50 wt.%, in particular 25 - 45 wt.%, especially 30 - 40 wt.%, of water; and

10 - 40 wt.%, in particular 15 - 35 wt.%, especially 20 - 30 wt.%, of neopentyl glycol as the first polyol; and
10 - 50 wt.%, in particular 30 - 50 wt.%, especially 35 - 45 wt.%, hexylene glycol as the second polyol;
or

b) 10 - 50 wt.%, in particular 25 - 45 wt.%, especially 30 - 40 wt.%, of water; and

10 - 40 wt.%, in particular 15 - 35 wt.%, especially 20 - 30 wt.%, of neopentyl glycol as the polyol; and
10 - 50 wt.%, in particular 30 - 50 wt.%, especially 35 - 45 wt.%, of polyalkylene glycol alkyl ether, in particular

poly-(ethylene glycol-propylene glycol)-monoalkylether and/or polyethylene glycol neopentyl ether.

**12.** Use according to any of preceding claims, whereby the polyol is used in combination with a plasticizer, especially a polycarboxylate ether.

**13.** Use according to claim 12, whereby the plasticizer is used with a proportion of 0.0001 - 10 wt.-%, especially 0.01 - 5 wt.%, in particular 0.1 - 3 wt.-%, particularly 0.5 - 2 wt.%, with respect to the weight of the mineral binder in the mineral binder composition.

**14.** Use according to any of preceding claims, whereby the mineral binder in the mineral binder composition comprises cement, especially cement of type CEM I, CEM II, CEM III, CEM IV and/or CEM V (according to the standard EN 197-1:2011).

**15.** Admixture for improving the sulfate resistance and/or the chloride resistance of a mineral binder composition in the form of an aqueous solution comprising:

a) 10 - 50 wt.%, in particular 25 - 45 wt.%, especially 30 - 40 wt.%, of water; and

10 - 40 wt.%, in particular 15 - 35 wt.%, especially 20 - 30 wt.%, of a first polyol, especially neopentyl glycol; and
10 - 50 wt.%, in particular 30 - 50 wt.%, especially 35 - 45 wt.%, of a second polyol, especially hexylene glycol;
whereby the first and the second polyols are physically and/or chemically different
or

b) 10 - 50 wt.%, in particular 25 - 45 wt.%, especially 30 - 40 wt.%, of water; and

10 - 40 wt.%, in particular 15 - 35 wt.%, especially 20 - 30 wt.%, of a polyol; especially neopentyl glycol, and
10 - 50 wt.%, in particular 30 - 50 wt.%, especially 35 - 45 wt.%, of a polyalkylene glycol, especially of polyalkylene glycol alkyl ether, in particular poly-(ethylene glycol-propylene glycol)-monoalkylether and/or polyethylene glycol neopentyl ether.

Europäisches Patentamt
European Patent Office
Office européen des brevets

# EUROPEAN SEARCH REPORT

Application Number
EP 23 19 9951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO LIXIAO ET AL: "Effect of polyethylene glycol on chloride binding in mortar", CONSTRUCTION AND BUILDING MATERIALS, vol. 311, 1 December 2021 (2021-12-01), page 125321, XP93132966, Netherlands ISSN: 0950-0618, DOI: 10.1016/j.conbuildmat.2021.125321 Retrieved from the Internet: URL:https://www.sciencedirect.com/science/article/pii/S0950061821030622/pdfft?md5=3b4bb3a02f7e188f3eb3d8a57b0b8aae&pid=1-s2.0-S0950061821030622-main.pdf> [retrieved on 2024-02-20] * the whole document * ----- | 1-15 | INV. C04B28/02 C04B40/00 |
| X | CN 105 174 808 A (FUJIAN CONSTRUCTION ENGINEERING GROUP BUILDING MATERIAL SCIENCE & TECH) 23 December 2015 (2015-12-23) * the whole document * ----- | 1,2,4-6, 14 | |
| | | | TECHNICAL FIELDS SEARCHED (IPC) |
| | | | C04B |
| A | AU 2016 341 065 A1 (SIKA TECH AG [CH]) 26 April 2018 (2018-04-26) * the whole document * ----- | 1-15 | |

1

The present search report has been drawn up for all claims

| Place of search | Date of completion of the search | Examiner |
|---|---|---|
| Munich | 20 February 2024 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 9951

This annex lists the patent family members relating to the patent documents cited in the above-mentioned European search report. The members are as contained in the European Patent Office EDP file on
The European Patent Office is in no way liable for these particulars which are merely given for the purpose of information.

20-02-2024

| Patent document cited in search report | Publication date | Patent family member(s) | Publication date |
|---|---|---|---|
| CN 105174808 A | 23-12-2015 | NONE | |
| AU 2016341065 A1 | 26-04-2018 | AU 2016341065 A1 | 26-04-2018 |
| | | CN 108349809 A | 31-07-2018 |
| | | CO 2018005184 A2 | 31-07-2018 |
| | | EP 3365300 A1 | 29-08-2018 |
| | | JP 6966433 B2 | 17-11-2021 |
| | | JP 2018531207 A | 25-10-2018 |
| | | JP 2021165231 A | 14-10-2021 |
| | | US 2018282233 A1 | 04-10-2018 |
| | | WO 2017067872 A1 | 27-04-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5772752 A
- US 20030168781 A1, Kukkonen